(19)

Europäisches
Patentamt
European
Patent Office
Office européen
des brevets

(11) **EP 3 102 347 B1**

(12) **EUROPEAN PATENT SPECIFICATION**

(45) Date of publication and mention
of the grant of the patent:
**12.06.2019 Bulletin 2019/24**

(21) Application number: **15702998.4**

(22) Date of filing: **22.01.2015**

(51) Int Cl.:
**B09B 3/00** *(2006.01)* **B09C 1/00** *(2006.01)*

(86) International application number:
**PCT/EP2015/051234**

(87) International publication number:
**WO 2015/113888 (06.08.2015 Gazette 2015/31)**

(54) **USE OF APC RESIDUE FOR SOIL TREATMENT, AND A METHOD FOR STABILIZING ARSENIC IN SOIL**

VERWENDUNG VON APC-RÜCKSTAND ZUR BODENBEHANDLUNG UND VERFAHREN ZUR STABILISIERUNG VON ARSEN IM BODEN

UTILISATION DE RÉSIDUS APC POUR TRAITEMENT DE SOLS, ET PROCÉDÉ DE STABILISATION D'ARSENIC DANS LES SOLS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2014 SE 1450081**

(43) Date of publication of application:
**14.12.2016 Bulletin 2016/50**

(73) Proprietor: **Ragn-Sells AB**
**191 29 Sollentuna (SE)**

(72) Inventors:
• **KIHL, Anders**
**S-178 38 Ekerö (SE)**
• **TRAVAR, Igor**
**S-141 92 Huddinge (SE)**
• **KUMPIENE, Jurate**
**S-972 36 Luleå (SE)**

(74) Representative: **Herbjørnsen, Rut**
**Trona Patentrådgivning AB**
**Rosterigränd 4**
**117 61 Stockholm (SE)**

(56) References cited:
**WO-A1-97/44500**

• **I. TRAVAR ET AL: "The release of As, Cr and Cu from contaminated soil stabilized with APC residues under landfill conditions", JOURNAL OF ENVIRONMENTAL MANAGEMENT, vol. 151, 18 December 2014 (2014-12-18), pages 1-10, XP55174352, ISSN: 0301-4797, DOI: 10.1016/j.jenvman.2014.11.035**
• **ROBIN SHIRLEY ET AL: "Alkali activated solidification/stabilisation of air pollution control residues and co-fired pulverised fuel ash", JOURNAL OF HAZARDOUS MATERIALS, ELSEVIER, AMSTERDAM, NL, vol. 194, 26 July 2011 (2011-07-26), pages 232-242, XP028314154, ISSN: 0304-3894, DOI: 10.1016/J.JHAZMAT.2011.07.100 [retrieved on 2011-08-05]**
• **DERMATAS ET AL: "An evaluation of arsenic release from monolithic solids using a modified semi-dynamic leaching test", JOURNAL OF HAZARDOUS MATERIALS, ELSEVIER, AMSTERDAM, NL, vol. 116, no. 1-2, 10 December 2004 (2004-12-10), pages 25-38, XP005004349, ISSN: 0304-3894, DOI: 10.1016/J.JHAZMAT.2004.04.023**
• **Thomas Astrup: "Treatment of Waste Management of APC residues from W-t-E Plants", , October 2008 (2008-10), XP55174646, Denmark Retrieved from the Internet: URL:http://www.iswa.org/uploads/tx_iswakno wledgebase/Management_of_APC_residues_fro m _W-t-E_Plants_2008_01.pdf [retrieved on 2015-03-06]**

**(Cont. next page)**

- DUTRE V ET AL: "Study of the remediation of a site contaminated with arsenic", SCIENCE OF THE TOTAL ENVIRONMENT, ELSEVIER, AMSTERDAM, NL, vol. 220, no. 2-3, 18 September 1998 (1998-09-18), pages 185-194, XP027275603, ISSN: 0048-9697 [retrieved on 1998-09-18]
- AMUTHA RANI D ET AL: "Plasma treatment of air pollution control residues", WASTE MANAGEMENT, ELSEVIER, NEW YORK, NY, US, vol. 28, no. 7, January 2008 (2008-01), pages 1254-1262, XP022613804, ISSN: 0956-053X, DOI: 10.1016/J.WASMAN.2007.06.008 [retrieved on 2008-01-01]
- KUMPIENE ET AL: "Stabilization of As, Cr, Cu, Pb and Zn in soil using amendments - A review", WASTE MANAGEMENT, ELSEVIER, NEW YORK, NY, US, vol. 28, no. 1, 13 November 2007 (2007-11-13), pages 215-225, XP022342547, ISSN: 0956-053X, DOI: 10.1016/J.WASMAN.2006.12.012
- D MOON ET AL: "Arsenic immobilization by calcium-arsenic precipitates in lime treated soils", SCIENCE OF THE TOTAL ENVIRONMENT, vol. 330, no. 1-3, September 2004 (2004-09), pages 171-185, XP055174593, ISSN: 0048-9697, DOI: 10.1016/j.scitotenv.2004.03.016

**Description**

**Technical Field and Background Information**

The present invention relates to a use of APC residue for soil treatment and a method of stabilizing arsenic, As, in soil.

Traditionally many industries such as glass works and paper mills have used chemicals comprising As. There are therefore many industrial sites heavily contaminated with As in Sweden as well as in other countries. Arsenic is a highly toxic metalloid, and land that is contaminated with As should not be used for housing areas, kindergartens, schools or parks. Remediation of these sites most often involves soil excavation and disposal at landfills. In some cases where soil is not heavily contaminated, washing of soil may be applied to remove the As from the soil so that it can be reused.

If the soil is too heavily contaminated, it will not be possible to make the soil sufficiently contaminant-free by soil washing. In these cases, the soil must be deposited at a landfill. There is a risk that As may be released from the disposed soil into the leachate which will put strain on the environment through the treatment of such leachate. In addition, deposited soil must be stable in a landfill over time. In this case, therefore, the As must be stabilized in the contaminated soil before disposal in a landfill. For the EU member states, EU Council Decision (2003/33/EC) and Landfill Directive 1999/31/EC, in particular Annex Criteria and Procedures for the Acceptance of Waste at Landfills, set the leaching limit values for waste acceptance at landfills for hazardous waste. If the limit values are exceeded, the soil must be treated before final disposal.

WO 96/36434 discloses mixing a fly ash with soil in a suspension for a period of some minutes, before separating the liquid phase from the granulate. The resulting granulate may be mixed with cement to solidify and used for building elements. The resulting liquid is contaminated and must be processed subsequently.

Methods for stabilizing As-contaminated soil are known in the art. Kumpiene J., Lagerkvist, A., Maurice, C. 2008, Stabilization of As, Cr, Cu, Pb and Zn in soil using amendments - A review, Waste Management 28, 215-225, shows that stabilization of As-contaminated soil with amendments implies a reduction of As mobility by mixing soil with e.g. Fe salts, zero-valent Fe, synthetic $Al(OH)_3$, Mn-oxides, alkaline materials such as cement, clay minerals, and sulfur containing materials at environment with low redox potential. Dutré et al. 1998, Study of the remediation of a site contaminated with arsenic, The Science of the total Environment 220, 185 - 194 also suggests solidification with cement and/or lime to prevent As leaching into the environment. Such methods are relatively costly and also require excavation of natural materials such as clay, which puts a strain on the environment.

Fly ash from incineration of coal has been tested as amendment in treatment of contaminated soil to reduce solubility of As, Pb, Cu and Cr (Kumpiene J., Lagerkvist, A., Maurice, C. 2007, Stabilization ofPb- and Cu-contaminated soil using coal fly ash and peat, Environmental pollution 145, 365-373; Dermatas, D., Meng, X. 2003, Utilization of fly ash for stabilization/solidification of heavy metal contaminated soils, Engineering geology 70, 377-394; Moon, D.H., Dermatas, D. 2006, Arsenic and lead release from fly ash stabilized/solidified soils under modified semi-dynamic leaching conditions, Journal of Hazardous Materials 141, 388-394). Moon and Dermatas: Arsenic and lead release from fly ash stabilized/solidified soils under modified semi-dynamic leaching conditions, Journal of Hazardous Materials 141 (2007), 388-394 reported that the immobilization of As from soil/fly ash mixture was positively related with the amount of fly ash and that the main mechanism controlling the release of As after stabilization is a combination of wash off and diffusion.

Dermatas et al.: "An evaluation of arsenic release from monolithic solids using a modified semi-dynamic leaching test", Journal of Hazardous Materials, Elsevier, Amsterdam, NL, vol. 116, No. 1-2, 10 December 2004, discloses the treatment of contaminated soil using class C fly ash from combustion of sub-bituminous coal and/or quicklime.

Shirley et al: Alkali activated solidification/stabilisation of air pollution control residues, Journal of Hazardous Materials, Elsevier, Amsterdam, NL, vol. 194, 26 July 2011, discloses stabilization of APC residues by means of fly ash. Hence, according to Shirley et al., two types of combustion residues are mixed to stabilize each other. The mixture has to be cured for a period of time in order to solidify.

**Summary of the Invention**

It is an object of the present invention to enable the immobilization of As in soil in a cost-efficient way.

The invention relates to the use of Air Pollution Control (APC) residue, for treatment of contaminated soil, wherein the APC residue is obtainable by combustion of waste and cleaning of the flue gas from the combustion by means of lime, wherein the APC residue and the soil are mixed and allowed to solidify.

The invention also relates to a method of stabilizing As in contaminated soil, comprising the step of mixing soil with APC residue, wherein the APC residue is obtainable by combustion of waste and cleaning of the flue gas from the combustion by means of lime, and that the mix of soil and APC residue is allowed to solidify.

Hence, the invention relates to the use of APC residue from the combustion of waste for soil treatment, and in particular for the immobilization of As in contaminated soil. The mix of soil and APC residue may suitably be deposited in a landfill. Properties and origin of APC residues will be discussed below. The waste that is used to obtain the APC residues is fed to an incinerator. This waste may be any suitable type of waste, including municipal solid waste, industrial waste, hazardous waste, refuse derived fuel, or any combination of such types of waste. The APC residues consist of the particulate matter which is removed from the flue gas stream by e.g. electrostatic precipitators and amendments (e.g. lime) that are added to remove NOx and SOx from the flue gas stream. The soil to be treated is mixed with APC residue and the mix is allowed to solidify. The main elements of APC residues are oxides of Ca, Al and Si. When water is added to APC residues, chemical reactions between these elements result in the formation of calcium-silicate hydrate (CSH) and solidification. The same reactions occur when soil is treated with APC residues in the presence of water.

In a preferred embodiment, the APC residue has a minimum CaO content of 200 g/(kgTS), more preferably 300 g/kg(TS). It is also preferable if the APC has a basicity index (BI) of 2 or higher, BI being calculated as $(\%CaO+\%MgO)/(\%SiO_2)$.

The use preferably comprises mixing the APC and the soil, for example in a soil mixer known per se, and preferably with the addition of a small amount of water. An amount of water in the range of 20 - 30 % by wet weight, preferably 22 - 25 % by wet weight, relative to the total amount of soil and APC residue has been found to be suitable. The water is preferably added to the APC residue. It has been found that to achieve a total amount of water of 20 - 30 % in the soil/APC residue mix, it is often suitable to add to the APC residue an amount of water in the range of 20 - 30 % by weight of the APC residue. The water content of the soil often lies in the range of 20 - 30 % by weight without any addition of water. Tests have shown that a soil to APC residue % ratio of 70/30 is in many cases sufficient to achieve a result well below the limit value set in the EU Landfill Directive for deposition of waste in landfills for non-hazardous waste. The actual soil to APC residue ratio required to achieve the required As content will vary depending on the quality of the soil and its initial As content. It will also depend on the properties of the APC residues, in particular its calcium content. By allowing the mix to solidify, a monolithic structure is obtained, which results in the limited contact between water (or leachate in this case) and treated soil (encapsulation of As occurs). It is expected that monolithic structure will be stable in a landfill. In effect, the APC residue has a similar stabilizing effect to what could be achieved by adding cement to the soil, but with a smaller amount of APC residue compared to the amount of soil. When using cement to stabilize soil according to the prior art, which means that the volume of the waste is significantly increased.

According to the invention, both components (contaminated soil and APC residue) constitute waste that should be managed, so the total volume of waste does not increase at all.

The stabilization/solidification of the soil/APC residue mix also reduces the leaching of chlorides from the APC residue. Typically, APC residue has high levels of chloride salts, which can be harmful for fresh water organisms.

Air pollution control (APC) residues from the combustion of waste has been shown to be very efficient for binding, or immobilizing, As in soil, compared to APC residues from other sources. It has also been shown to have a similar effect on other elements, such as zinc and cadmium.

It has become more common to burn waste instead of just depositing it at a landfill. According to the Swedish landfill directive (SFS 2001:512), it is not allowed to deposit combustible fraction of unsorted and organic waste at landfills. Combustion of the waste reduces the volume of the waste, and also produces heat. Therefore, amounts of incinerated waste and hence amounts of APC residues are increasing over time. When burning municipal solid waste or industrial waste, the resulting flue gas must be cleaned before it can be released into the environment.

The cleaning of flue gases involves both physical and chemical processes. Physical processes, which will not be discussed in any detail here, such as filtering (e.g. electrostatic precipitators, bag filters) and settling, are used to remove small particles from the flue gas stream. In addition to the small particles, flue gases also comprise acid gases such as HCl, $SO_2$, HF and $NO_x$ and metals such as Hg. Removal of these flue gas components typically involves the use of burnt lime as an absorbent. This can be done with dry, semi-dry and wet systems. In dry systems powdered lime is injected into the flue gas stream in dry reactor. Semi-dry systems use lime mixed with water, which is injected into the flue gas stream as a slurry. Wet process use wet scrubbers with injecting water, lime slurry ($CaOH_2$) and caustic soda (NaOH). The wet scrubber process produces a stream of fly ash and a stream of acid scrubber effluent. Removal of Hg from flue gases most often involves activated carbon, while removal of $NO_x$ is based on the addition of ammonia either at high temperatures in furnaces (selective non-catalytic reduction) or at lower temperatures where a catalyst is used. The result of the cleaning process is typically a fine-powdered mixture of fly ash, reaction products and unreacted lime, referred to as Air Pollution Control Residues (APC residues) and comprising a mixture of fly ash and calcium components such as oxides and carbonates of calcium.

Such APC residues in general comprise fly ash, burnt lime that has not reacted, as well as lime compounds, and are often highly alkaline. The APC residues resulting from the combustion of municipal solid wastes and industrial waste are even more alkaline than other types of APC residues that have been tested, which contributes to the As-binding effect. Typically these APC residues have a pH of 12 - 13 or even higher, whereas other types of APC residues typically have a pH of 11 - 12.

APC residues from the combustion of waste, such as municipal solid waste or industrial waste, comprise lead in higher quantities than in APC residues from other sources such as the combustion of wood. These residues must therefore be treated to prevent the lead from being released into the environment. Therefore, when the APC residues from municipal solid waste incinerator is used, the method of the invention has the double effect of both immobilizing As contaminants in the soil and of binding lead in the APC residues, thus combining two desired treatment effects in one operation. Hence, there is a synergistic effect in the use of APC residues, in particular APC residues obtained from municipal solid waste, for soil treatment, in that two types of contaminated waste, which both need to be treated, can be handled together and effectively used to treat each other.

At the same time, APC residues from the combustion of waste such as municipal solid waste (MSWAPC) and industrial waste are a resource that is cheap and readily available, since it is obtainable by a process that is already performed for handling waste. This makes the process very cost-efficient. Landfills for the APC residues are usually located close to incinerators which makes this process even more advantageous compared to processes where other amendments are used.

The use and method according to the invention have the double effect of immobilizing harmful substances, from soil and at the same time reducing leakage of harmful substances such as chlorides and lead from APC residue. Further, allowing the soil/APC residue to stabilize/solidify results in a geotechnically stable monolithic structure which further reduces the leaching of harmful substances. This enables the deposit of two types of contaminated waste together, in such a way that they mutually reduce each other's contaminating effects. In this way, the use and method according to the invention combine chemical stabilization of contaminants with geotechnical stabilization caused by the solidification of the mix.

**Acronyms and Abbreviations**

| | |
|---|---|
| FA | Fly ash |
| MSWAPC | Air pollution control residue from incineration of municipal solid waste. Referred to as HFA in the priority document. |
| CAPC | Air pollution control residue from incineration of coal. Referred to as CFA in the priority document |
| BAPC | Air pollution control residue from incineration of biofuels. Referred to as BFA in the priority document |
| LO and LT | Two types of soil from Lessebo, an old sawmill in Sweden |
| | In the priority document these types of soil were referred to as Lessebo Brown (LB) and Lessebo Sand (LS), respectively |
| TS | Total solids |

**Brief Description of the Drawings**

The invention will be described in more detail in the following, with reference to the appended drawings, in which:

Figures 1A and 1B show schematically the concentrations of As in eluate of soil/APC residue mixtures after batch leaching tests

Figures 2A and 2B are diagrams of the immobilization of As in soil by means of APC residues

Figure 3 shows the solubility of As from APC residues, soil and soil/APC residue mixtures under different pH conditions

Figure 4 shows schematically the setup of the diffusion test

Figure 5 shows the cumulative release of As from APC residue (MSWAPC) per exposed area in the diffusion test

Figure 6 shows the cumulative release of As from soil per exposed area in the diffusion test

Figure 7 shows the cumulative release of As from a mixture of APC residues and soil (MSWAPC/LT) per exposed area in the diffusion test

**Detailed description**

In the following description, the term APC residue should be taken to mean a mixture comprising fly ash, lime and possibly other compounds after treatment of the flue gas stream from incinerator.

Results from studies on three different types of APC residues will be discussed below, i.e. the APC residue from incineration of municipal solid waste, referred to in the examples as household waste (MSWAPC, referred to in the priority document as HFA), coal and 10% of olive kernel (CAPC, referred to in the priority document as CFA) and bio fuels such as wood chips (BAPC, referred to in the priority document as BFA). Table 1 shows, among other things, the content of CaO in the three different types of APC residues used. As can be seen, MSWAPC has a higher content of CaO than CAPC or BAPC. As will be shown in the following, APC residue from the combustion of municipal solid waste has proved to be more effective in immobilizing As than APC residues from other sources, for example in experiments as described below.

Three different tests have been applied for determining the stability of As in contaminated soil before and after mixing it with APC residues: the batch leaching test, the pH-stat test and the diffusion leaching test. Each of the experiments was performed mixing contaminated soil and one of the types of APC residues in a manner known per se.

The tests were performed using soil from Lessebo, which is an old sawmill. The soil in this area is heavily contaminated with As. Two types of soil from Lessebo were used: loamy till (LT, referred to as LS in the priority document) and soil rich in organic matter (LO, referred to as LB in the priority document) as indicated by loss on ignition values (LOI) in Table 2.

Table 1 Amount of total solids (TS), and elements in ashes (average $\pm$ standard deviations (SD) n=3)

| Component | MSWAPC Amount | CAPC Amount | BAPC Amount |
|---|---|---|---|
| | Average SD | Average SD | Average SD |
| Content of total solids, (g/(kgTS)) | | | |
| TS | 987 $\pm$ 1.5 | 999 $\pm$ 0 | 999 $\pm$ 0.5 |
| Major constituents, (g/(kgTS)) | | | |
| $SiO_2$ | 103 $\pm$ 7 | 366 $\pm$ 64 | 460 $\pm$ 80 |
| $Al_2O_3$ | 44 $\pm$ 6 | 115 $\pm$ 5 | 51 $\pm$ 2.5 |
| CaO | 329 $\pm$ 41 | 187 $\pm$ 24 | 259 $\pm$ 18 |
| MgO | 17 $\pm$ 0.05 | 107 $\pm$ 3 | 32 $\pm$ 3.7 |
| Minor constituents (mg/(kg TS)) | | | |
| As | 68 $\pm$ 7.0 | 28 $\pm$ 4.6 | 5 $\pm$ 0 |
| Basicity index = (%CaO+%MgO) / (% $SiO_2$) | | | |
| BI | 3.3 $\pm$ 0.2 | 0,8 $\pm$ 0.1 | 0.7 $\pm$ 0.2 |

Table 2 Amount of total solids (TS), loss on ingnition (LOI) and elements in soil from Lessebo (LT) and (LO) soil (average $\pm$ standard deviations (SD) n=3)

| Component | LT Amount | LO Amount |
|---|---|---|
| | Average SD | Average SD |
| Content of total solids, (g/(kgTS)) | | |
| TS | 835 $\pm$ 9 | 707 $\pm$ 15 |
| Loss on ignition (g/(kgTS)) | | |
| | 48 $\pm$ 4.5 | 140 $\pm$ 15 |
| Major constituents, (g/(kgTS)) | | |
| $SiO_2$ | | |
| $Al_2O_3$ | 580 $\pm$ 50 | 210 $\pm$ 26 |
| CaO | 0.4 $\pm$ 0.05 | 1 $\pm$ 0.08 |
| Minor constituents (mg/(kg TS)) | | |
| As | 2382 $\pm$ 209 | 5332 $\pm$ 709 |

The batch leaching test was performed to study immobilization of As in soil/APC residue mixture, compared to soil alone. The test was performed as a one-step batch leaching test according to Swedish standard SS-EN 12457-3 at liquid to solid ratio (L/S) of 10 1/kg. Such batch leaching tests were performed on soil/APC residue mixtures as well as on soils and APC residues separately, in triplicates.

Immobilization of an element (for example As) was calculated with the following equation:

$$I = \left(1 - \frac{A}{X \cdot B + Y \cdot C}\right) * 100 \qquad (Eq.1)$$

Where *I* is the immobilization of an element in %

*A* is the concentration of an element in eluate of soil/APC residue mixture in mg/(kg TS)

*B* is the concentration of an element in eluate of APC residue in mg/(kg TS)

*C* is the concentration of an element in eluate of soil in mg/(kg TS)

*X* is the mass fraction of APC residue in soil/APC residue mixture on dry weight in kg ash/(kg mixture)

*Y* is the mass fraction of soil in soil/APC residue mixture on dry weight in kg soil/(kg mixture)

The results, as will be seen in the following, show that in identical experiments performed with each of the three types of APC residues, the degree of immobilization of As was higher in MSWAPC than in CAPC and BAPC. In particular, the degree of immobilization was significantly higher in MSWAPC than in BAPC.

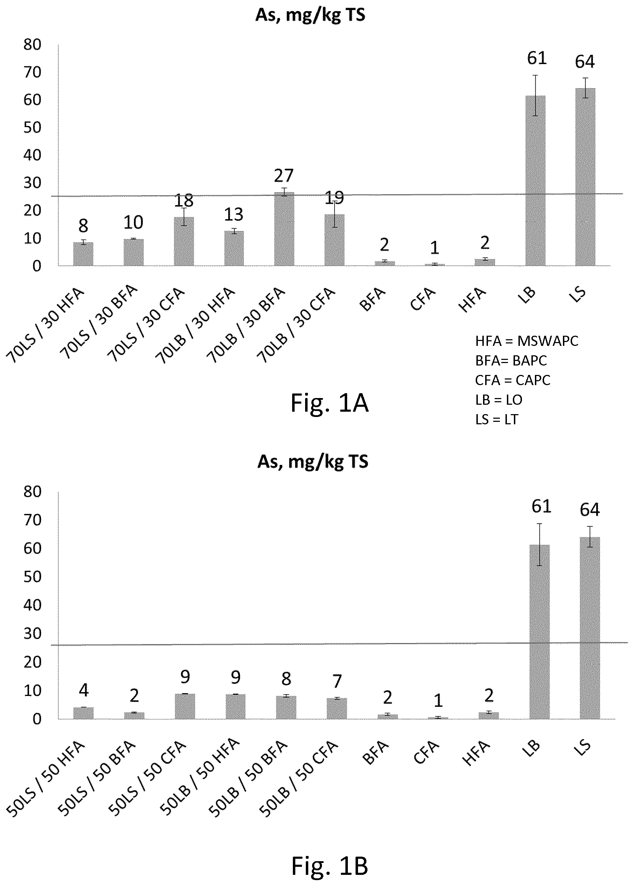

Figures 1A and 1B show the concentrations of As in eluate of soil/APC residue mixtures as well as in eluates from soil and APC residues separately resulting from the batch leaching tests at L/S=10 1/kg. The red line represents the leaching limit value for landfilling of hazardous waste according to the EU landfill directive. Both figures show that Lessebo soil cannot be landfilled at landfills for hazardous waste without pre-treatment. For each of the tests, one type of soil, LT or LO, was mixed with one type of APC residue, BAPC, CAPC or MSWAPC.

Figure 1A shows the As concentration in mixtures of 70 % LT or LO, respectively and 30 % APC residues, as well as in the APC residues (BAPC, CAPC and MSWAPC) alone and soil (LO and LT) alone. All the eluates from the mixtures of soil and APC residues were below the limit values for As, except for the mixture of LO and BAPC, which was slightly above the limit. This means that all the soil/APC residue mixtures shown, except 70%LO/30%BAPC can be landfilled after treatment at landfills for hazardous waste. Stabilization of As with APC residues gave better results in soils with lower content of organic matter such as LT soil.

Figure 1B shows the As concentration in mixtures of 50 % LT or LO, respectively and 50 % APC residues, as well as in the APC residues (BAPC, CAPC and MSWAPC) alone and soil (LO and LT) alone. As can be seen, the As content in eluates from all mixtures of soil and APC residues is well below the leaching limit value for landfilling of hazardous waste according to the EU landfill directive. All soil/APC residues mixtures shown in Figure 1B can be landfilled after treatment at landfills for hazardous waste.

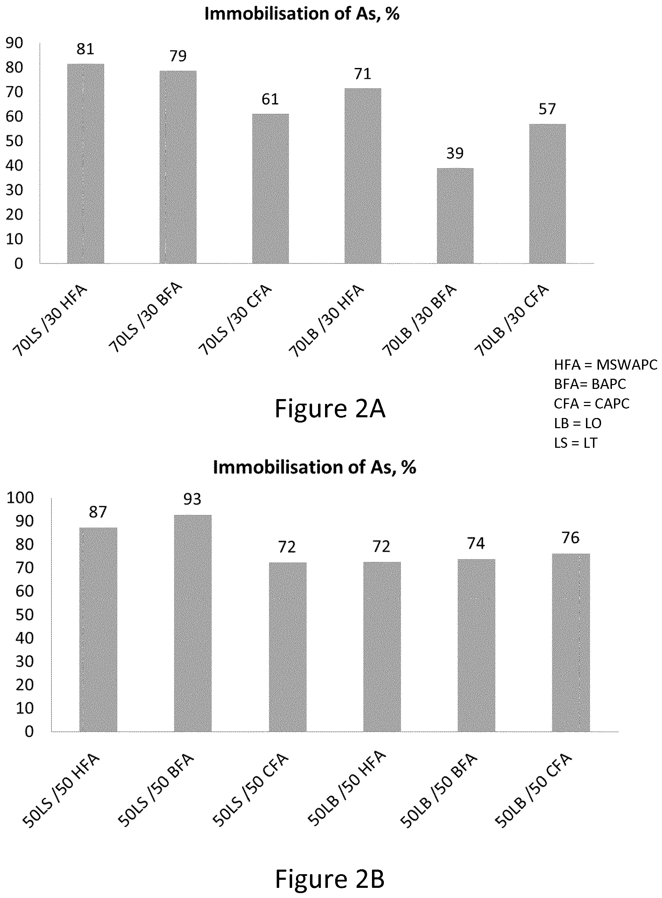

Figures 2A and 2B show results of the batch leaching test expressed as the immobilized fraction of As in different mixtures of soil and APC residues. Looking in particular at the results for the mixtures of 30 % APC residues and 70 % soil shown in Figure 2A, it can be seen that MSWAPC is more effective than BAPC or CAPC, for immobilizing As. The immobilization of As was directly proportional to the amount of CaO in the APC residue. It can be concluded that the effectiveness of the APC residue for immobilization of As in contaminated soil, and the amount of APC residue needed, depends on the amount of CaO in the APC residue.

As shown in Figure 2B, mixtures with 50%APC residue/50% soil show similar efficiency in immobilization of As (except for CAPC/LT, se Figure 2B). Here, however, BAPC turned out to be slightly more effective than MSWAPC. Compared to MSWAPC and BAPC, more CAPC is needed to reach the same immobilization efficiency, since CAPC contains less CaO compared to these two other APC residues.

Geochemical modelling of the experiments indicate that lime comprised in the APC residue from combustion of municipal solid waste contributes to the increased effect by forming calcium arsenate $Ca_3(AsO_4)_2$ , weilite and john-baumite with the As of the soil. The stability, of calcium arsenate depends strongly on its pH. In alkaline conditions the calcium arsenate is highly stable, but not when the pH drops to neutral values. Under neutral conditions, therefore, calcium arsenate will be released in higher amounts than in alkaline conditions.

As can be seen from Figures 1A, 1B, 2A and 2B, the effectiveness of the different types of APC residues is strongly linked to the amount of CaO, and tests have indicated that the degree of immobilization of As in soil is directly proportional to the amount of CaO in the APC residues. Based on the data above, the CaO content should be above 150 g/kgTS, more preferably above 200 g/kgTS, even more preferably above 300 g/kgTS.

The effectiveness is also linked to the basicity index, calculated as $(\%CaO+\%MgO) / (\%SiO_2)$, which, in the example, is significantly higher in the MSWAPC than in the BAPC and CAPC. The basicity index for MSWAPC was above 2 whereas the basicity index for CAPC and BAPC were both well below 2.

When depositing contaminated soil, especially soil that has high quantities of toxic compounds, it is very important that the contaminating substances do not leach into the surroundings, but are kept stable in the landfill for a very long time. The standard leaching tests defined in the Landfill Directive are not applicable for solidified materials and redox sensitive compounds, such as As. Two different tests have therefore been applied to determine what will happen to the deposited solidified soil in the landfill over time. The first test is based on simulating different pH values in the waste-surrounding environment (pH-stat test) and the second test is a diffusion test, which is used to evaluate the release of soluble constituents from monolithic-type materials such as solidified soil. The pH-stat test was performed according to the modified availability test NT ENVIR 003. The diffusion test was accomplished according to standard NEN 7345.

For the pH-stat test, different pH values were tested. Water, APC residues and soil were mixed in a bottle, in the proportions of 4 g of ash, 4 g of soil and 800 ml $H_2O$. This gives a liquid to soil ratio of L/S=100 1/kg. Then, over a period of 24 h, acid was added to the solution that comprises of solid and liquid phase.

To begin with, the pH was approximately 12, because of the alkaline properties of the APC residue. The soil itself and the water, before mixing with APC residue, had a pH of about 7.

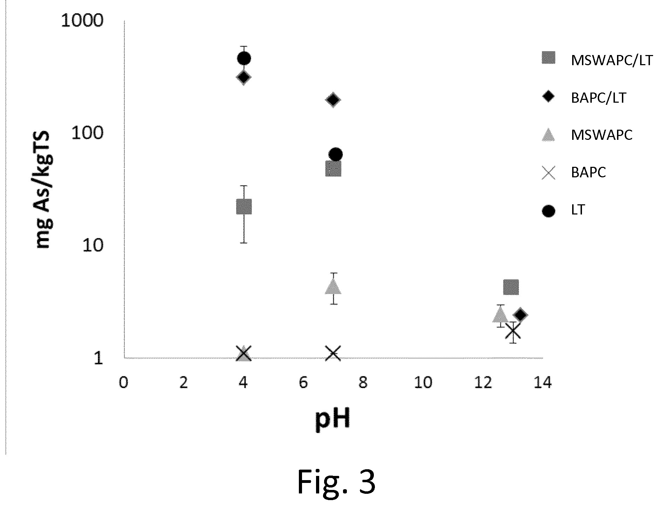

Acid (1M $HNO_3$) was added to mixture to obtain a pH of 7 or 4, respectively. Figure 3 shows the solubility of As from ashes (MSWAPC and BAPC), soil (LT) and mixtures of 50% of soil and 50% of APC residues (MSWAPC/LT and BAPC/LT), respectively. As can be seen, solubility is low for all mixtures at pH between 12 and 14, and significantly higher for pH 7 and 4. As expected, the As compounds in the mixture became less stable and more As was released from the mixtures when the pH was lowered. Because of the buffering capacity of the mixture, the pH was lowered very slowly and high amounts of acid were required to achieve this effect. In practice, therefore, in a landfill, the pH value of the deposited soil/APC residue mixture will be very stable, since it will normally be exposed only to limited amounts of rain water. Normally, the landfill will be covered by a landfill cover, to prevent water infiltration to the landfill and gas emissions from the landfill to the atmosphere. The cover limits the amount of water that will affect the deposited material. Therefore, the pH stat tests show that the pH, which is initially around 12, will remain substantially stable for a very long period of time. Based on the amount of acid that was used to neutralize the soil/ash mixtures, and converting it to the amount of rain water that needs to percolate through the material to reach pH7, it would take millions of years before the buffering capacity of the mixtures is consumed.

The diffusion test was performed by varying temperature and redox conditions and to simulate the effect of landfill gas on the release of As.

Samples were made by packing a mixture of soil and AP residues, and soil and APC residues separately, in plastic tubes. The tubes were open at both ends and had a diameter of 45 mm and a length of 50 mm.

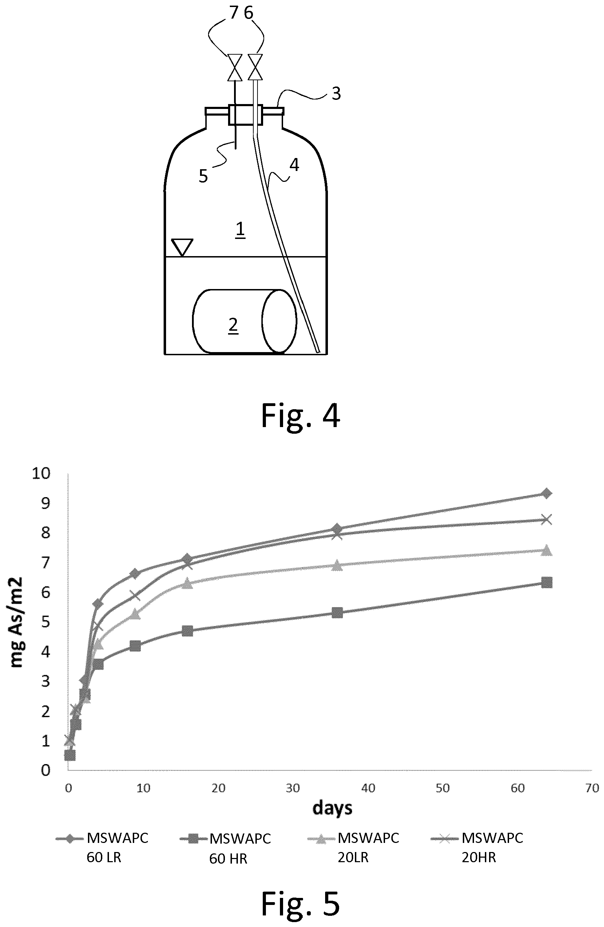

The setup for the test is shown schematically in Figure 4, which shows a bottle 1 of the type used in the test, comprising a sample 2. The bottle is sealed hermetically by a lid 3. A hose 4 is connected through the lid 3 to enable the addition of water, and to take water samples, through a first valve 6. To this end, a syringe (not shown) can be connected to the hose 4 through the first valve 6. A needle 5 connected through the lid 3 is connected to a second valve 7, to which a vacuum pump (not shown) can be connected, to remove air in the bottles that were to be filled with landfill gas. When an underpressure of 0.95 bar was reached in those bottles, landfill gas was inserted by means of a syringe until atmospheric pressure was reached in the bottles.

For the test, 60 samples were produced and each was placed, in its plastic tube, in a glass bottle (1 in Figure 4) having a volume of 1 liter. Hence, only the bases of the samples were exposed to the liquid phase. 12 samples were made of each of the following soil types: pure LT soil, pure MSWAPC, pure BAPC, a mixture of MSWAPC/LT and a mixture of BAPC/LT. The 60 bottles were hermetically sealed. To each bottle 4 dl of water was added. According to standard, nitric acid was added to the water to achieve an initial pH of 4. For each soil type, half of the bottles were filled with landfill gas and the other half were filled with air. Hence, there was a total of 30 bottles filled with landfill gas and 30 filled with air.

For each of the soil types, half of the bottles filled with air, and half of the bottles filled with landfill gas were placed at a temperature of 60 °C and the remaining 15 bottles with air and 15 bottles with landfill gas were placed at a temperature of 20 °C. In this way, there were three samples of each soil type under each set of conditions (temperature, air or landfill gas). The experiment continued for 64 days, and during this time samples were taken from all bottles at eight different points in time: after 6 h, 24 h, 54 h, 4 days, 9, days, 16 days, 36 days and 64 days. Water samples were taken with a syringe which was connected to the plastic hose 4 via the first valve 6 in Figure 4. All bottles were emptied during water sampling. When sampling was finished, new acidified water was added to the bottles and new landfill gas was added to the half of the bottles.

To begin with, a mixture of carbon dioxide ($CO_2$) and methane ($CH_4$) was used in ratio 1:1 to simulate landfill gas, between day 2.25 (54 h) and 4 only $CO_2$ was used and after day 4 a mixture comprising 55 % $CH_4$, 25 % $CO_2$ and 20 % nitrogen gas was used. The test results are shown in Figures 5 - 7, and will be discussed below. Throughout the test, the pH was between 11 and 12.5 in the bottles filled with air. In the bottles filled with landfill gas it varied between 6.6 and 10. The pH changed due to ageing of APC residue samples but also due to solubility of landfill gas, because $CO_2$ from landfill gas was transported to the liquid phase and decreased the pH of the solution. The pH was measured after each sampling occasion.

The measured leached As per exposed area is calculated as

$$E_i = c_i \cdot V / A \qquad\qquad (Eq.2)$$

Where $E_i$ is the measured leached amount of As in fraction i in mg/m$^2$
$C_i$ is the measured concentration of the component in fraction i in mg/l
$A$ is the surface area of the sample in m$^2$

*V* is the volume of the eluate in 1

The measured cumulative leaching $\varepsilon_n$ in each of the periods *n*=1 to 8 is calculated as

$$\varepsilon_n = \sum_{i=1}^{n} E_i \qquad (Eq.3)$$

Where

$\varepsilon_n$ is the measured cumulative leaching of a component for period n comprising fraction *i*=1 to *n* in mg/m$^2$
$E_i$ is the measured leaching of the component in fraction in mg/m$^2$
*n* is the number of periods equal to the number of specified replenishment times (N=8)

Figures 5, 6 and 7 show the measured cumulative leaching of As from MSWAPC, LT and mixture of MSWAPC and LT, respectively. In each of the Figures 5 - 7, the legend 60LR and 60HR means that the samples were kept at 60°C; the legend 20LR and 20HR means that the samples were kept at 20°C. For both temperatures, LR means that the samples were exposed to landfill gas (bottles were filled with landfill gas) whereas HR denotes the samples that were exposed to air (bottles were filled with air).

Figure 5 shows that the measured cumulative leaching of As from MSWAPC is between 5 and 10 mg/m$^2$ after 64 days. The uppermost curve is from the samples that were filled with landfill gas and kept at 60 °C and the lowermost curve is from the samples that were filled with air and kept at 60 °C.

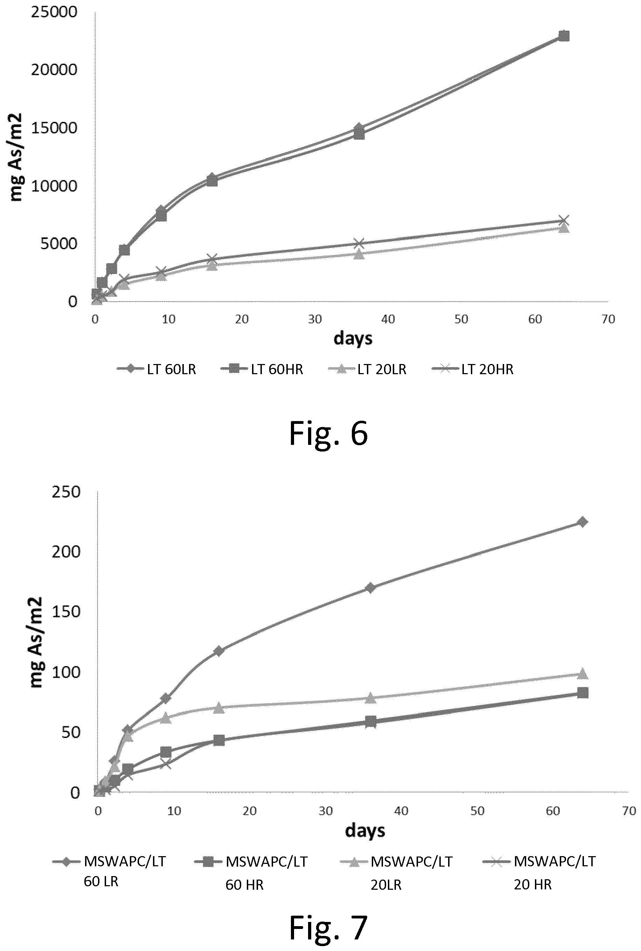

Figure 6 shows that the measured cumulative leaching of As from soil LT is between 5000 and 25000 mg/m$^2$ after 64 days. The uppermost curve is from the samples that were filled with landfill gas and kept at 60 °C and the curve immediately below it is from the samples that were filled with air and kept at 60 °C. The results from the samples that were kept at 20 °C are shown in the lowermost two curves.

Figure 7 shows that the measured cumulative leaching of As from a MSWAPC/LT mixture is between 50 and 250 mg/m2 after 64 days. Again, the uppermost curve is from the samples that were filled with landfill gas and kept at 60 °C. The lowermost two curves, which are nearly overlapping, show the results for the samples that were filled with air and kept at 60 °C and 20 °C, respectively.

It can be seen from Figures 6 and 7 that stabilized LT soil with MSWAPC (mixture MSWAPC/LT) decreases release of As by two orders of magnitude compared to an untreated soil sample.

All three types of APC residues were shown to have effect for immobilizing As in the soil. Surprisingly, the MSWAPC, which was in itself the most contaminated of the three, turned out to be the most effective for immobilizing As.

When treating soil before depositing it at a landfill, the mixing of APC residues and contaminated soil is normally performed at the landfill. Preferably the liquid content of the ash and/or the soil is controlled to ensure optimum stabilization/solidification of the mix. This optimum moisture of the APC residues has been found to be about 20 - 30 % by wet weight, taking into account the moisture which is necessary for solidification reactions. For best results, an amount of water should be added to the APC residue to enhance its solidification properties. This amount of water is preferably in the range of 20 - 30 % by weight of the APC residue. Soil normally comprises a certain percentage of water but there may also be a need to control the water content of the soil. A total water content of 20 - 30 % in the mix of soil and APC residue has also been found to be suitable. In this case, contaminated soil is excavated and transported from its location to the landfill. If the amount of leached As from the soil is higher than the leaching limit values for waste acceptance, the contaminated soil has to be treated. As shown above, a suitable method for soil treatment is mixing with APC residue resulting from the cleaning of flue gas from the combustion of organic material. In particular, APC residue from the combustion of municipal solid waste has been shown to be especially effective.

Conventional soil mixers can be used for mixing the contaminated soil with fly ash. For example, soil mixers such as the ones routinely used for mixing soil and sand, peat, bark, chemicals and fertilizers are suitable. The aim of the mixing is to secure good homogeneity of the soil/ash mixture, that is, an even distribution of ash particles between the soil particles. For the mix to stabilize/solidify, the mix is kept together over a period of time long enough to create a monolithic structure which will be mechanically stable. After mixing, soil/APC residues should be landfilled immediately (or as soon as possible) in order not to deteriorate their compaction properties. Monolithic structure will develop in a landfill over time (i.e. after several months). The mixture of contaminated soil with APC residues can be deposited in the landfill in a manner known in the art and according to the applicable regulations. This normally involves additional measures such as covering the landfill in a prescribed manner.

## Claims

1. Use of Air Pollution Control - APC - residue for treatment of contaminated soil, **characterized in that** the APC residue is obtainable by combustion of waste and cleaning of the flue gas from the combustion by means of lime, wherein the APC residue and the soil are mixed and allowed to solidify.

2. Use according to claim 1, wherein the water content of the mix of APC residue and soil is controlled to enhance solidification of the mix.

3. Use according to claim 1 or 2, wherein the APC residue has a minimum CaO content of 200 g/(kgTS), more preferably 300 g/(kgTS).

4. Use according to any one of the preceding claims, wherein the APC residue has a basicity index, BI, of 2 or higher, wherein BI is calculated as $(\%CaO+\%MgO)/(\%SiO_2)$.

5. Use according to any one of the preceding claims, for stabilizing As in the soil.

6. Use according to any one of the preceding claims, comprising the step of mixing the soil with the APC residue, preferably in a soil mixer.

7. Use according to any one of the preceding claims, comprising the step of depositing the mixture of soil and APC residue in a landfill.

8. A method of stabilizing As in contaminated soil, comprising the step of mixing soil with APC residue, **characterized in that** the APC residue is obtainable by combustion of waste and cleaning of the flue gas from the combustion by means of lime, that the mix of soil and APC residue is allowed to solidify.

9. A method according to claim 8, comprising the step of mixing the APC residue with an amount of water before mixing soil with APC residue, the amount of water preferably in the range of 20 - 30 % by weight of APC residue.

10. A method according to claim 8 or 9, wherein the APC residue is obtainable by a process, comprising the steps of mixing flue gas resulting from the combustion of waste with lime and separating fly ash and other particles from the gas before releasing the gas, wherein the fly ash and other particles constitute the APC residue.

11. A method according to claim 8, 9 or 10, wherein the fraction of APC residue relative to the soil is at least 30/70.

12. A method according to any one of the claims 8 - 11, wherein the APC residue has a basicity index, BI, of 2 or higher, wherein BI is calculated as $(\%CaO+\%MgO)/(\%SiO_2)$.

## Patentansprüche

1. Verwendung eines Luftreinhaltungsrückstands (Air Pollution Control- bzw. APC-Rückstand) zur Behandlung von verunreinigtem Boden, **dadurch gekennzeichnet, dass** der APC-Rückstand durch Verbrennung von Abfall und Reinigen des Rauchgases aus der Verbrennung mittels Kalk erhältlich ist, wobei der APC-Rückstand und der Boden gemischt werden und sich verfestigen können.

2. Verwendung nach Anspruch 1, wobei der Wassergehalt der Mischung aus APC-Rückstand und Boden kontrolliert wird, um die Verfestigung der Mischung zu verbessern.

3. Verwendung nach Anspruch 1 oder 2, wobei der APC-Rückstand einen CaO-Mindestgehalt von 200 g/(kg TM), bevorzugter 300 g/(kg TM) aufweist.

4. Verwendung nach einem der vorhergehenden Ansprüche, wobei der APC-Rückstand einen Basizitätsindex BI von 2 oder höher aufweist, wobei BI als $(\% CaO + \% MgO)/(\% SiO_2)$ berechnet wird.

5. Verwendung nach einem der vorhergehenden Ansprüche zum Stabilisieren von As im Boden.

**6.** Verwendung nach einem der vorhergehenden Ansprüche, umfassend den Schritt des Mischens des Bodens mit dem APC-Rückstand, vorzugsweise in einem Bodenmischer.

**7.** Verwendung nach einem der vorhergehenden Ansprüche, umfassend den Schritt des Ablagerns der Mischung aus Boden und APC-Rückstand in einer Mülldeponie.

**8.** Verfahren zum Stabilisieren von As in verunreinigtemBoden, umfassend den Schritt des Vermischens von Boden mit APC-Rückstand, **dadurch gekennzeichnet, dass** der APC-Rückstand durch Verbrennung von Abfall und Reinigen des Rauchgases von der Verbrennung mittels Kalk erhältlich ist, so dass die Bodenmischung, und der APC-Rückstand sich verfestigen können.

**9.** Verfahren nach Anspruch 8, umfassend den Schritt des Mischens des APC-Rückstands mit einer Wassermenge, bevor der Boden mit dem APC-Rückstand gemischt wird, wobei die Wassermenge vorzugsweise im Bereich von 20 bis 30 Gew.-% bezogen auf den APC-Rückstand liegt.

**10.** Verfahren nach Anspruch 8 oder 9, wobei der APC-Rückstand durch ein Verfahren erhältlich ist, umfassend die Schritte des Mischens von Rauchgas, das aus der Verbrennung von Abfall mit Kalk entsteht, und Trennen von Flugasche und anderen Partikeln aus dem Gas vor dem Freisetzen des Gases, wobei die Flugasche und andere Partikel den APC-Rückstand bilden.

**11.** Verfahren nach Anspruch 8, 9 oder 10, wobei der Anteil des APC-Rückstands relativ zum Boden mindestens 30/70 beträgt.

**12.** Verfahren nach einem der Ansprüche 8 bis 11, wobei der APC-Rückstand einen Basizitätsindex BI von 2 oder höher aufweist, wobei BI als (% CaO + % MgO)/(% $SiO_2$) berechnet wird.

**Revendications**

**1.** Utilisation d'un résidu de lutte contre la pollution de l'air (LPA) pour le traitement d'un sol contaminé, **caractérisée en ce que** le résidu de LPA peut être obtenu par combustion de déchets et nettoyage du gaz de combustion issu de la combustion au moyen de chaux, le résidu de LPA et le sol étant mélangés et laissés se solidifier.

**2.** Utilisation selon la revendication 1, dans laquelle la teneur en eau du mélange de résidu de LPA et de sol est régulée pour améliorer la solidification du mélange.

**3.** Utilisation selon la revendication 1 ou la revendication 2, dans laquelle le résidu de LPA a une teneur en CaO minimale de 200 g/(kgTS), mieux encore de 300 g/(kgTS).

**4.** Utilisation selon l'une quelconque des revendications précédentes, dans laquelle le résidu de LPA a un indice de basicité, IB, supérieur ou égal à 2, l'IB étant calculé par (%CaO + %MgO)/(%$SiO_2$).

**5.** Utilisation selon l'une quelconque des revendications précédentes, pour stabiliser l'As dans le sol.

**6.** Utilisation selon l'une quelconque des revendications précédentes, comprenant l'étape de mélange du sol avec le résidu de LPA, de préférence dans un mélangeur de sol.

**7.** Utilisation selon l'une quelconque des revendications précédentes, comprenant l'étape de dépôt du mélange de sol et de résidu de LPA dans une décharge.

**8.** Procédé de stabilisation de l'As dans un sol contaminé, comprenant l'étape de mélange de sol avec un résidu de LPA, **caractérisé en ce que** le résidu de LPA peut être obtenu par combustion de déchets et nettoyage du gaz de combustion issu de la combustion au moyen de chaux, **en ce que** le mélange de sol et de résidu de LPA est laissé se solidifier.

**9.** Procédé selon la revendication 8, comprenant le mélange du résidu de LPA avec une quantité d'eau avant le mélange du sol avec le résidu de LPA, la quantité d'eau étant de préférence comprise dans la plage de 20 à 30 % en poids de résidu de LPA.

10. Procédé selon la revendication 8 ou la revendication 9, dans lequel le résidu de LPA peut être obtenu par un procédé comprenant les étapes de mélange de gaz de combustion issu de la combustion des déchets avec de la chaux et de séparation des cendres volantes et d'autres particules du gaz avant de libérer le gaz, les cendres volantes et les autres particules constituant le résidu de LPA.

11. Procédé selon la revendication 8, la revendication 9 ou la revendication 10, dans lequel la fraction de résidu de LPA par rapport au sol est égale à au moins 30/70.

12. Procédé selon l'une quelconque des revendications 8 à 11, dans lequel le résidu de LPA a un indice de basicité, IB, supérieur ou égal à 2, l'IB étant calculé par $(\%CaO + \%MgO)/(\%SiO_2)$

## As, mg/kg TS

HFA = MSWAPC
BFA= BAPC
CFA = CAPC
LB = LO
LS = LT

### Fig. 1A

## As, mg/kg TS

### Fig. 1B

**Immobilisation of As, %**

HFA = MSWAPC
BFA= BAPC
CFA = CAPC
LB = LO
LS = LT

Figure 2A

**Immobilisation of As, %**

Figure 2B

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9636434 A

**Non-patent literature cited in the description**

- **KUMPIENE J. ; LAGERKVIST, A. ; MAURICE, C.** Stabilization of As, Cr, Cu, Pb and Zn in soil using amendments - A review. *Waste Management,* 2008, vol. 28, 215-225
- **DUTRÉ et al.** Study of the remediation of a site contaminated with arsenic. *The Science of the total Environment,* 1998, vol. 220, 185-194
- **KUMPIENE J. ; LAGERKVIST, A. ; MAURICE, C.** Stabilization ofPb- and Cu-contaminated soil using coal fly ash and peat. *Environmental pollution,* 2007, vol. 145, 365-373
- **DERMATAS, D. ; MENG, X.** Utilization of fly ash for stabilization/solidification of heavy metal contaminated soils. *Engineering geology,* 2003, vol. 70, 377-394
- **MOON, D.H. ; DERMATAS, D.** Arsenic and lead release from fly ash stabilized/solidified soils under modified semi-dynamic leaching conditions. *Journal of Hazardous Materials,* 2006, vol. 141, 388-394
- **MOON ; DERMATAS.** Arsenic and lead release from fly ash stabilized/solidified soils under modified semi-dynamic leaching conditions. *Journal of Hazardous Materials,* 2007, vol. 141, 388-394
- An evaluation of arsenic release from monolithic solids using a modified semi-dynamic leaching test. **DERMATAS et al.** Journal of Hazardous Materials. Elsevier, 10 December 2004, vol. 116
- Alkali activated solidification/stabilisation of air pollution control residues. **SHIRLEY et al.** Journal of Hazardous Materials. Elsevier, 26 July 2011, vol. 194